# EUROPEAN PATENT APPLICATION

(11) **EP 4 553 704 A1**
(43) Date of publication of application: **14.05.2025**
(21) Application number: 23208813.8
(22) Date of filing: 09.11.2023
(51) Int. Cl.: G06N 3/063, G06F 13/00

(54) **COMPUTING DEVICE AND COMPUTER SYSTEM FOR DETERMINISTIC EXECUTION OF NEURAL NETWORKS, APPARATUS COMPRISING SAME, METHOD FOR PROVIDING A COMPUTING DEVICE AND COMPUTER SYSTEM CONFIGURATION ARRANGEMENT**

(71) Applicant: Airbus S.A.S., 31700 Blagnac (FR)
(72) Inventor: Freitag, Johannes, 82024 Taufkirchen (DE); Uhrig, Sascha, 82024 Taufkirchen (DE)
(74) Representative: OTN Airbus SAS

(57) **Abstract**

A computing device (3), a computer system (1), an apparatus (4), a method and a computer system configuration arrangement (2) for providing deterministic execution of neural networks are described, the comprising device (3) comprising at least one processing module (30) carrying at least one processing unit (31) having a number of logical cells (86); an input interface unit (20) for feeding a data object (11) to the processing module (30), and a fetch shift unit (37) linked to the input interface unit and to at least a some of the logical cells (86) which are configured as multiply-accumulate units (38); wherein the fetch shift unit (37) contains a fetch shift engine (10) configured to slice up the data object (11) into data slices (13) to be transferred to the multiply-accumulate units (38).

## Description

### Technical Field

The present disclosure relates computer systems providing deterministically executed neural networks for accelerating artificial intelligence (Al) interference in controlling fault intolerant and/or safety-critical apparatuses, such as vehicles, e.g., aircraft or alike. In particular, the disclosure relates to a computing device for deterministic execution of neural networks, to a computer system providing a neural network, an apparatus, such as a vehicle, in particular an aircraft, comprising a corresponding computer system, as well as a method for providing a computing device, and a computer system configuration arrangement.

### Technical Background

Computer systems for controlling fault intolerant and/or safety-critical apparatuses are known from the prior art. Such computer systems commonly comprise computing devices, e.g., in the form of microcontrollers, digital signal processors (DSPs) field programmable gate arrays (FPGAs), application-specific integrated circuit (ASICs), and alike. The computing devices can be used for accelerating certain functions and/or processes of the computer systems and can constitute a core part of control systems for controlling all kinds of technical installations, including fault intolerant and safety relevant apparatuses, such as vehicles, medical devices, utility provider infrastructure, and alike. Thus, the computing devices have to be specifically reliable.

EP 2 608 084 B1, for example, relates to a system for executing a given scientific code using a suitable finite-volume or finite-element solver for a large dataset represented as a grid, comprising a plurality of equal computing nodes interconnected by node communication means and a parallel computing software package for distributing and controlling the execution in sub-grids among said computing nodes; each computing node comprising at least a CPU-based first processing means and a FPGA-based second processing means interconnected by a bus; said package being configured for the simultaneous execution of at least one first solver process (which is fully executed in a first processing means) and one second solver process (which is fully executed in a second processing means) in each computing node for one sub-grid of said grid and for managing the exchange of boundary data with the solver processes that solve neighbour sub-grids.

EP 2 482 193 B1 refers to a method that involves using execution rules for processes executed on field-programmable gate array computing circuits and CPU controllers. Relevant parameters of a state of an avionics system are monitored based on the rules. An alarm is generated when a parameter does not conform to the rules. The alarm is checked and validated or invalidated. Architecture of the system is reconfigured in a dynamic and automatic manner in case of validation of the alarm by migrating avionics function/model. The rules are used again in case of invalidation of the alarm.

AI algorithms are known from the prior art as well and can be executed on different processing devices such as CPUs, GPUs, TPU. However, for flexibility, power efficiency and availability reasons (e.g., radiation hardness of the device, certifiability in an aircraft) it is beneficial to use FPGAs for the inference of neural networks. Several architectures for AI inference on FPGAs are available. The approaches can be split into three types: First, every layer of the network is implemented as a separate structure on the FPGA and the whole network is executed in a pipelined way (e.g., HLS4ML). Second, only one processing unit is processing the different operations and the layers sequentially. Third, for different types of operations (e.g., convolutions, fully connected) different individual accelerators are foreseen in the FPGA.

The first approach massively pipelines the processing of a neural network. However, this is resource intensive on the FPGA as there is a need for buffering between the different layers. The requirement for these architectures is that all the processing stages must fit into the FPGA which makes it suitable only for comparable small neural networks. The second approach uses the same processing element for the majority of the operations. This often has the problem of using a design optimised for one type of operation for another type of operation then with degraded performance. For example, using an architecture for convolutional neural networks for fully connected layers can yield lower performance for the fully connected layer. The third approach can be seen as a trade-off between the first two approaches. The individual processing units need resources on the FPGA but are highly specialized on the given task. Depending on the design of the neural network to be processed, this can be leveraged but often only one of the processing engines is busy at a time because there are data dependencies. In this case, the resources are wasted.

Independent of the aforementioned global architectures, the processing units usually consist of systolic arrays or multiply operations followed by an adder tree structure to add up the results. Systolic arrays are able to solve matrix multiplications efficiently. Nevertheless, when processing convolutional neural networks, this creates a data overhead as the input parameters (feature maps, kernels) have to be transformed into a matrix which is much bigger than the actual data to be processed. The other option, i.e., multiplications with a tree structure, is resource efficient as for every multiplication to be done only a fraction of an adder/accumulator is used which are resource intensive hardware components. However, the tree structure is dependent on the kernel size of the respective convolution, e.g., for a 5x5 kernel, the input structure has 25 inputs. If a network has layers with different kernel sizes, which is the case for most architectures, this architecture cannot be used efficiently for smaller kernel sizes, such as 3x3.

In view of the above, computing devices for controlling fault intolerant and/or safety relevant apparatuses, as known from the prior art, do not satisfy certain requirements with regard to computing performance when providing or being combined with neural networks, in particular neural networks for Al-interference. Consequently, the usability of AI in computing systems for controlling fault intolerant and/or safety-critical apparatuses is limited.

### Summary

It may thus be seen as an object to provide a computing device which can enable computer systems for controlling fault intolerant and/or safety relevant apparatuses to use neural networks in an essentially fault free, utmost secure, and highly performant manner. Furthermore, it may be seen as an object to enhance or at least provide a way to equip such computer systems with neural networks for Al-interference. These objects are solved by the subject matter of the independent claims.

In particular, a computing device for deterministic execution of neural networks is provided, comprising at least one processing module carrying at least one processing unit having a number of logical cells; an input interface unit for feeding a data object to the processing module, and a fetch shift unit linked to the input interface unit and to at least a some of the logical cells which are configured as multiply-accumulate units; wherein the fetch shift unit contains a fetch shift engine configured to slice up the data object into data slices to be transferred to the multiply-accumulate units.

A computer system providing a neural network is provided, comprising at least one corresponding computing device.

An apparatus, such as a vehicle, in particular an aircraft, is provided, comprising a corresponding computer system.

A method for providing a computing device is provided, the method comprising the steps of providing at least one processing module carrying at least one processing unit having a number of logical cells; providing an input interface unit for feeding a data object to the processing module, configuring at least some of the logical cells as multiply-accumulate units; and providing a fetch shift unit linked to the input interface unit and to the multiply-accumulate units and containing a fetch shift engine configured to slice up the data object into data slices to be transferred to the multiply-accumulate units.

A computer system configuration arrangement is provided which is configured to carry out the steps of a corresponding method.

A corresponding computer system configuration program for configuring a computing device comprises instructions which, when the program is executed by a computer, cause the computer to carry out a corresponding method. A computer-readable data carrier has stored thereon the computer system configuration program. The computer-readable data carrier may include and/or be comprised of a computer-readable medium and/or a data carrier signal carrying the computer system configuration program and/or comprising respective instructions which, when the program is executed by a computer, cause the computer to carry out a method for configuring a computing device.

The solution particularly provides computing devices which are suitable for all kinds of fault intolerant and/or safety-critical apparatuses. Consequently, the underlying object is also achieved by providing an apparatus comprising the claimed computing device. A corresponding apparatus may be provided in particular in form of a vehicle, such as a land vehicle, watercraft, aircraft and/or spacecraft, a medical device, such as a diagnostic tool or technical appliance, and/or any kind of utility provider infrastructure, such as power plants, energy network installations, as well as information infrastructure installations. A computer system for solving the underlying problem may thus comprise a computing device. The computer system thereby helps to accelerate Al-interference in a fully deterministic way.

The fetch shift unit can run the fetch shift engine performing the desired functions of the fetch shift unit. The data slices can be a certain number of bits of a data object. The data object may be any kind of data grouped or linked to each other to form a digital representation of information that can be of an abstract and/or concrete source. As an abstract source, the information may relate to data base values. As a concrete source, the information may relate to sensor data, such as sound and/or image, or alike. The data object may thus be a certain file, such as a data base file, an image file, and/or a sound file, or at least a body of information thereof encapsuled in a file or provided as a data stream or alike.

The processing module can comprise and/or be comprised of an FPGA and/or ASIC providing at least some of the multiply-accumulate units. The number of multiply-accumulate units implemented in a given FPGA depends on the resources of the FPGA. The solution thus provides an architecture which is particularly suitable for a deterministic execution of neural networks by logical cells of FPGAs. The invention is portable to any kind of FPGA and/or ASIC, including e.g., space-grade FPGAs, since it does not rely on specialized hardware logic inside the FPGA. The architecture has the flexibility to use any floating point or integer size (e.g., FP32, Int8) and it has low power consumption compared to GPUs which eases integration into an aircraft/spacecraft. Moreover, the provided architecture is understandable and explainable which helps during the certification process.

The provided solution has the advantage over the prior art that especially for timing deterministic and safety-critical applications, neural networks for AI interference can be utilised in areas where consumer devices for AI processing cannot be used. The solution can be implemented as part of digital semiconductors and processing units for airborne and space applications or any other application with requirements on timing determinism such as autonomous driving, sensor fusion, decision making, etc. The solution is not limited to safety-critical applications but can be beneficial for accelerating any kind of AI inference in computing devices and computer and/or control systems.

Further developments can be derived from the dependent claims and from the following description. Features described with reference to the computing device may be implemented as method steps, or vice versa. Therefore, the description provided in the context of the computing device applies in an analogous manner also to respective methods. In particular, the functions of the computing device and of its components may be implemented as steps of methods and the method steps may be implemented as functions of the computing device, a computer system configuration arrangement or vice versa.

According to an aspect of a computing device, the fetch shift unit is configured to feed the multiply-accumulate units with data slices layered in line with a predefined data order of the data object. The fetch-shift engine of the fetch shift unit can redirect the data to the multiply-accumulate units in a predefined manner. Thereby, the data slices constituting the data object can be processed layer by layer in a fast and resource efficient manner.

According to an aspect of a computing device, the fetch shift engine is configured to perform zero padding on a data object to provide a desired data dimension. The advantage of zero padding, in particular a data transfer in connection with the above-mentioned zero padding, is that a routing and zero padding on-the-fly can be achieved, such that zeros are being added to the data object during the fetch and shift process in order to adapt the object to a desired kernel size. Respective zero padding does not have to be stored in memory. Thereby, memory space can be saved which leads to low memory requirements. This can be particularly relevant for FPGAs where memory space commonly is the most constrained resource.

According to an aspect of a computing device, the multiply-accumulate units are configured to perform a single multiply-accumulate operation. For example, every single multiply-accumulate unit may consist of a multiplier and of an adder. Both can be configured to calculate with float or integer values. It is important to note that the adder does not necessarily have to be configured as an accumulator which allows for accumulating data in every clock cycle. These accumulators are resource intensive. Instead, the multiply-accumulate units as described herein can be configured to perform as a simple adder accumulating multiple sums during multiple cycles in a pipelined way. This helps in providing a simple and robust, yet efficient design.

According to an aspect of a computing device, at least some of the multiply-accumulate units are grouped as a multiply-accumulate module. For example, certain logic cells of the computing device may be configured as the multiply-accumulate units in a group such that they provide the multiply-accumulate module. Thereby, the computing device may be provided in a so-called gate-array or semi-custom design, structure design or even full-custom design, depending on the amount of flexibility of the computing device desired and/or required for performing a specific function, e.g., providing a neural network or at least parts thereof. This helps in providing a robust and reliable, yet efficient and highly performant computing device for accelerating Al interference.

According to an aspect of a computing device, data words of the data object are sliced up into the data slices. Thereby, a serialisation on the width of the respective values computed in form of the data slices and making up the data words can be provided. The values from the data slices are thus computed in parallel rather than in blocks of full values constituting the data words. One advantage of such a serialisation is that the fetch-shift engine uses only a fraction of the resources while keeping the same structure of the fetch-shift engine. As another advantage, this type of serialisation allows to fetch small amounts of data in form of the data slices from the data object received through the input interface unit, and to write large amounts of data from/to any kind of memory very flexibly. The serialisation can be parametrized as desired or required for performing a certain function of the computing device depending on a delay of the adder of the multiply-accumulate units without changing the routing code of the fetch shift engine.

According to an aspect of a computing device, an amount N of data slices constituting the data word equals a number C of consecutive computational cycles within which the fetch shift unit is configured to feed the amount N of data slices to the multiply-accumulate units. In order to achieve timing closure at a meaningful clock rate, the adder can be pipelined, e.g., for float 32, i.e., a data word containing 32 bit, this leads to a number C of typically 8 cycles for transferring 4-bit data slices making up the data word, thus leading to the serialisation of a computing task to be performed, as already described above. For example, this means that 8 cycles after two values were at the input of the adder, the result is available to be added with the next multiplication result. The provided serialisation again helps in providing a robust and reliable, yet efficient and highly performant computing device for accelerating Al interference.

According to an aspect of a computing device, the computing device is configured to execute a convolution operation with a weight value assigned to every feature value. Thereby, the provided architecture is fully time deterministic in a way that for different weights the execution time is preserved. The weight values can be exchanged without resynthesizing the structure of the fetch shift unit and/or the multiply-accumulate units. This is advantageous for certification as an update of the weights does not lead to the need for a new timing analysis.

According to an aspect of a computing device, input feature values contained in a feature map are changed before and/or after a pre-defined number of computation cycles of the multiply-accumulate units. The input for the feature values can be a number of C, for example, 8 cycles of the same input feature map which is multiplied with the respective weight values for the respective output feature map. The output of the adder can then be fed back to the input of the fetch shift unit so that the accumulation is done with the correct multiplication value to be added. In this way, the multiplication and accumulation for a number of C, for example, 8 output values is done in parallel/interleaved. The advantage is that resources of the computing device, in particular of an FPGA, can be saved while being much more flexible for computing different kernel sizes compared to e.g., an adder tree.

According to an aspect of a computing device, output values of at least some of the multiply accumulate units are fed back to the fetch shift unit. Thereby, a design for multiply-accumulate units is possible, which are neither a systolic array nor a tree but a flat structure that implements the accumulation function with an adder function by interleaving processing two different output layers.

This saves resources on the computing device, in particular if implemented on an FPGA, and executes layers with different kernel sizes and fully connected layers efficiently.

According to an aspect of a computing device, memory units are assigned to the multiply accumulate units and output values of at least some of the multiply accumulate units are directly written to the memory units. This allows for an execution of highly parallel applications on the computing device which is particularly beneficial for implementing the computing device on a FPGA with limited connections between super logic regions of the FPGA. Thus, implementing the computing device on an FPGA with multiple super logic regions is facilitated.

### Brief Description of the Drawings

The subject matter will hereinafter be described in conjunction with the following drawing figures, wherein like numerals denote like elements, and wherein:
Fig. 1 is a schematic representation of a computer system comprising a computer system integration arrangement, a computing device and/or an apparatus in the form of a vehicle, such as an aircraft.
Fig. 2 is a schematic representation of the computing device shown in Fig. 1.
Fig. 3 is a schematic representation of a fetch shift engine of a fetch shift unit of the computing device shown in Figs. 1 and 2.
Fig. 4 is a schematic representation of a multiply-accumulate unit of the computing device shown in Figs. 1 and 2.
Fig. 5 is a schematic representation of super logic regions connecting logic areas of the computing device shown in Figs. 1 and 2.
Fig. 6 is a schematic representation of a serialisation through the processing of data slices as performed by the computing device shown in Figs. 1 and 2.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

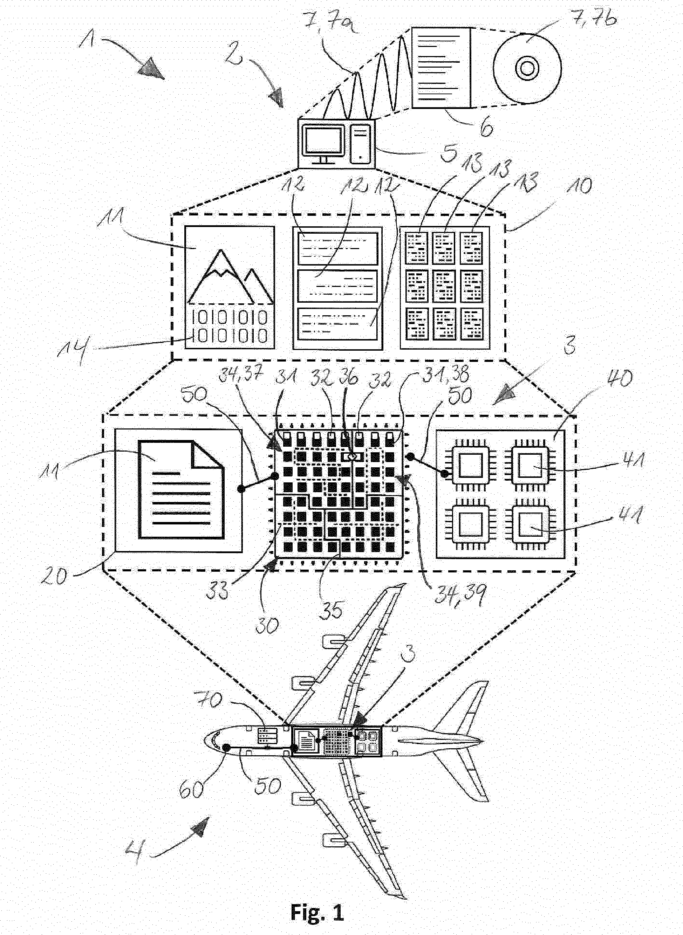

Fig. 1 shows a schematic representation of a computer system 1 comprising a computer system integration arrangement 2, a computing device 3 and/or an apparatus 4 in the form of a vehicle. The computer system integration arrangement 2 comprises a computer 5 configured to execute a computer system integration program 6. A computer-readable data carrier 7 has stored thereon the computer system integration program 6 and may take the form of a computer-readable medium 7a and/or data carrier signal 7b. When carrying out the computer system integration program 6, the computer 5 provides a fetch shift engine 10 to be run by the computing device 3.

The fetch shift engine 10 is configured to handle data objects 11, data segments, such as data words 12 of the data objects 11, and data slices 13 of the data words 12. Furthermore, the fetch shift engine 10 is configured to provide a zero padding 14 to the data object 11 in order to adapt a data object 11 to a desired kernel size for processing through the fetch shift engine 10. In operation, the fetch shift engine 10 takes the data words 12 of the data object 11, after applying zero padding 14 to the data object 11, if necessary, and slices the data words 12 up into the data slices 13, preferably in such a way that they are layered in line with a pre-defined data order of the data object 11.

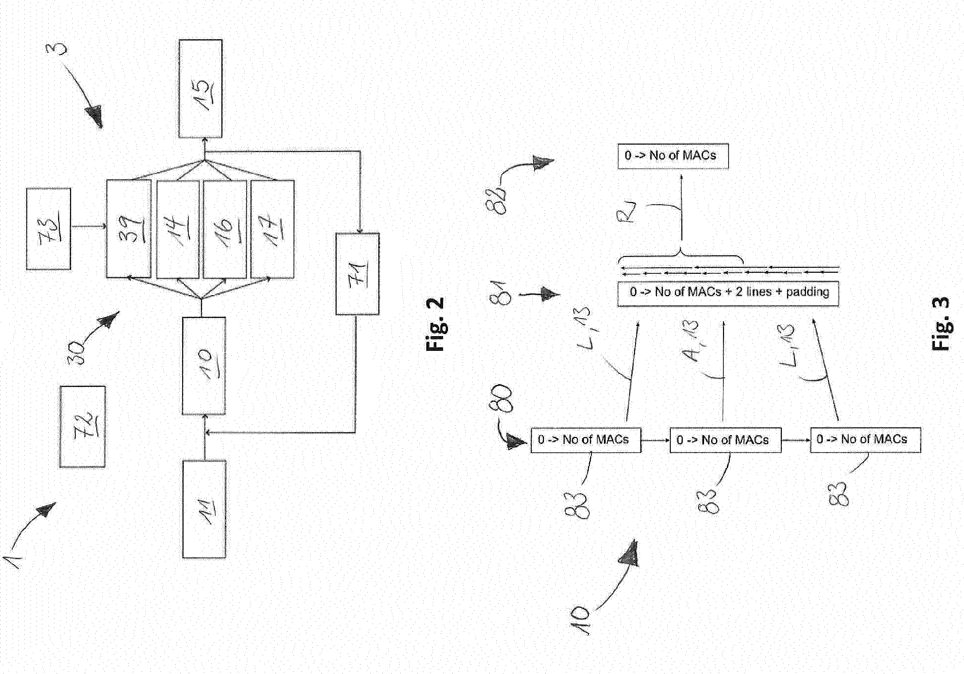

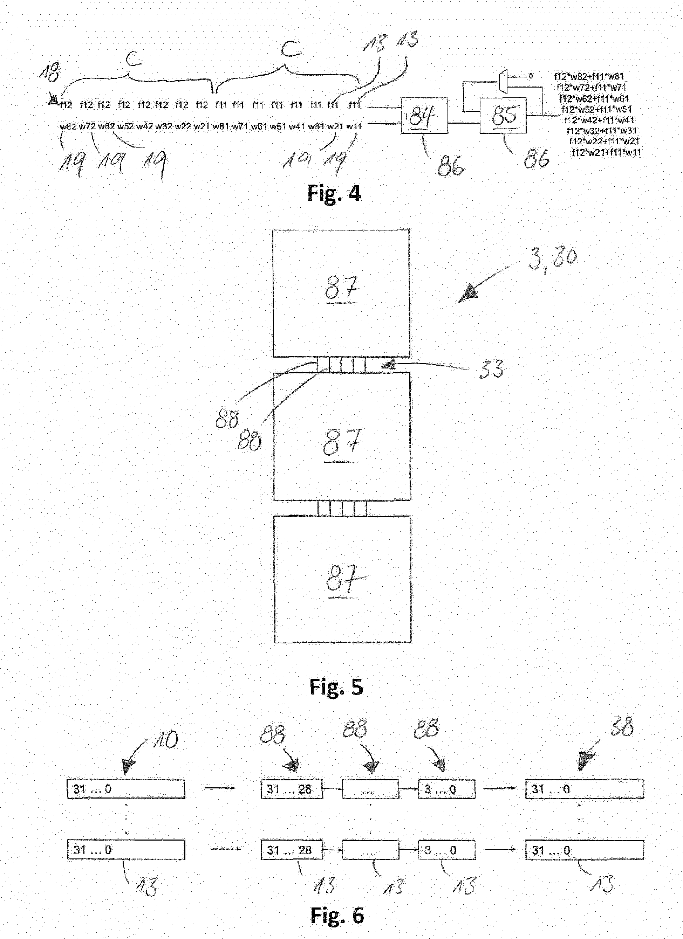

An amount of N data slices 13 is supposed to be processed by the computing device 3 within a respective number C of computing cycles having a respective time length in order to generate a desired output data 15 (see Fig. 2) to be output by an arbitrary output interface (not shown). The time length is usually measured in nanoseconds (ns) and represents the length of a common computer clock cycle of the computing device 3 or multiples of that length. If desired, the fetch shift engine 10 may additionally provide further functions of convolution on neural networks, such as max pooling 16, resizing 17, and/or alike (see Fig. 2). When configured for providing convolutional neural network, the computing device 3 can be adapted for handling feature values 18 and the respective weights values 19 for providing feature maps (see Fig. 4).

The computing device 3 comprises an input interface unit 20 for feeding the data object 11 to a processing module 30 of the computing device 3. The processing module 30 carries multiple processing units 31 with logical cells (see Fig. 4) which can be provided with respective memory units 32. Local data paths 33 of the processing module 30 provide communication links, connecting the processing units 31 to each other. The processing units 31 may be linked to each other via the communication links of the data paths 33 in such a way that they form processing areas 34, e.g. different dies of an FPGA and/or ASIC, separated from each other by boundaries 35.For passing computing values across the boundary 35 between a processing unit 31 belonging to a certain execution group 34 and a processing unit 31 outside of that execution group 34, the processing module 30 may be provided with a transfer element 36, e.g., provided as a connector between different super logic regions of an FPGA and/or ASIC. The transfer element 36 may comprise at least one buffer element (not shown) which can be configured to at least temporarily store at least one parameter value.

The fetch shift engine 10 can be implemented in a fetch shift unit 37 of the computing device 3. The fetch shift unit 37 can be provided as a respective execution group 34 of the processing module 30 containing those processing units 31 designated for running the fetch shift engine 10. A certain number of the processing units 31 is configured as multiply-accumulate units 38. The multiply-accumulate units 38 can be again form and execution group 34. In the respective execution group 34, the multiply-accumulate units 38 can be grouped to provide a multiply-accumulate module 39.

Additionally, the computing device 3 may comprise an external memory module 40 or may be at least connected thereto. The external memory module 40 comprises multiple external memory areas 41. The external memory module 40 and/or the external memory areas 41 thereof can be connected to the processing module 30 by means of data connections 50 for exchanging data, in particular computing values, between the processing units 31 and the external memory areas 41.

The apparatus 4 can be provided with the computing device 3 which may connect to at least one control element 60 of the apparatus 4 via one of the data connections 50. The control element 60 may be any kind of data source for providing the data object 11, such as a measuring element, sensor, output device and/or actuator of the apparatus 4, which may constitute a control system or at least a part thereof for controlling a certain function of the apparatus 4. The apparatus 4 may thus be at least in part controlled by means of the computing device 3, in particular by the processing module 30.

Furthermore, the apparatus 4 may comprise a control device 70, which may comprise the computer 5 and/or the computing device 3, or alike, and which can be connected to the control element 60 and/or the computing device 3 via respective data connections 50. Alternatively, or additionally, the control device 70 may comprise the computer system 1, the computer system integration arrangement 2 for setting up the computing device 3, the computer 5, the computer and system integration program 6, the computer-readable data carrier 7, and/or the control element 60 as well as any kind of the data connections 50 for exchanging data between the respective above-mentioned components.

Fig. 2 shows a schematic representation of the computing device 3 shown in Fig. 1. The data object 11 is being fed into the computing device 3 via the input interface unit 20 (see Fig. 1) and can originate e.g., from the control element 60 and/or control device in the form of a network, sensor, camera, etc, as described above. The individual values within the data object 11 are routed by the fetch shift engine 10 to the multiply-accumulate module 39 or at least one multiply-accumulate unit 38. The zero padding 14 is also performed by the fetch shift engine 10 if necessary.

The multiply-accumulate module 39 consists of many individual units 38 as necessary that are performing a single multiply-accumulate operation (MAC - see Fig. 4). The number of multiply-accumulate units 38 implemented in a given processing module 30 depends on the resources of the processing module 30. If a layer of data slices 13 cannot be computed in one step it is done consecutively. The result of the MAC operations is written into a buffer 71. This result is the input to the computation of the next layer of data slices 13 and is forwarded to the fetch-shift engine 10. This process of computing a layer of data slices 13, storing it in the buffer 71 and computing the next layer is repeated until all the layers have been processed.

After all required layers of data slices 13 have been processed, a respective result is forwarded as the output data 15 to a desired destination which can be an arbitrary output interface (not shown), the interface unit 20, the memory module 40, or alike. Other operations that do not require multiplication or adding such as the max pooling 16, in particular for reducing dimensionality of data objects 10 in the form of images by reducing a respective number of pixels relating to the image and the data output 15 from a previous layer of data slices 13, or the resizing 17, in case an upscaling is desired, can also be supplied by the fetch-shift engine 10 and the results can be stored in the buffer 71 as well.

A controller 72, which may be implemented in the computing device 3 and/or control device 70, is connected to the fetch shift engine 10, interface unit 20, the local network 33, the multiple-accumulate module 39 and/or the buffer 71 for setting the right addresses for the buffer 71, strides and kernel sizes in the fetch-shift unit 37 and iteration of the layers of data slices 13 depending on a lookup table containing the structure of the local network 33 and the respective connected units and/or modules. The whole design of the processing module 30 can be synthesized for the respective structure of the local network 33 and/or a corresponding neural network to be provided, i.e. it may only contain blocks necessary for a given network e.g. kernel sizes, activation functions, etc.

Moreover, a weight storage unit 73 is provided for storing the weight values 19 of a feature map of a convolutional neural network. The weight values 19 can be exchanged without resynthesizing a design of the processing module 30. The buffer 71 and/or the weight storage unit 73 can be provided by memory units 32 of the processing module 30, gateway element 36, and/or memory modules 41 of the external memory module 40. Alternatively, or additionally, the buffer 71 and/or the weight storage unit 73 such can function as a cache to the external memory module 40 which may be implemented as RAM, such as a DDR or alike. The buffer 71 and/or the weight storage unit 73 can particularly make use of the panel memory module 40 in case the resources on the processing module 30, i.e., the memory space providing by the memory unit 32, is not sufficient for performing a required computational task.

Fig. 3 shows a schematic representation of a fetch shift engine 10 of a fetch shift unit 37 of the computing device 3 shown in Figs. 1 and 2. The fetch-shift engine 10 slices up the data object 11 into data segments 12 and data slices 13 thereof in order to redirect the data slices 13 to the multiply-accumulate units 38. The fetch shift engine 10 can comprise three stages, namely a fetch stage 80, a shift stage 81, and/or a route stage 82. The fetch stage 80 can be configured as a shift register with register elements 83 having the kernel size of the multiply-accumulate units 38, i.e., a combined size of the register elements 83, and thus an overall size of the fetch stage 80 can correspond to a kernel size provided by a number P of multiply-accumulate units 38 arranged in parallel for simultaneous processing of the data slices 13.

In the fetch stage 80, the data slices 13 are fetched from the interface unit 20 and/or the buffer 71. Each register element 83 in the fetch stage 80 holds multiple lines (at least 2) of a feature map. The shift register depth depends on the maximum kernel resolution. On a signal from the controller 72, the fetched lines are transferred to the shift stage 81. From the first register element 83 only one line L of data slices 13 is transferred, while all the lines, i.e. a full array A data slices 13, are transferred from the second register element 83. The number of lines L of data slices 13 transferred from the last register depends on the kernel size. In the course of transferring the data object 11, i.e., data slices thereof 13, the zero padding 14 is applied if it is necessary for further processing.

The shift stage 81 now holds feature-map lines to supply the multiply-accumulate units 38 with input data for a given kernel size. For example, for a 3x3 kernel in order to compute two resulting lines L, four lines L are in the shift stage 81. The shift stage 81 can now shift either by one or by one line size. This allows to supply all the values to a multiply-accumulate unit 38 needed for one convolution operation in a sequential manner. For example, the first value in the shift stage 81 is finally supplied to the first multiply-accumulate unit 31. For, e.g., a 3x3 kernel, the first value of a line L is transferred to the multiply-accumulate unit 38, then the register is shifted by 1 and the second value is transferred. After the second shift, a shift by a line size-two is performed and the first value of the second line L is transferred to the multiply-accumulate unit 38 until all the values are transferred. This can be done in parallel for the number P of multiply-accumulate units 38 available. The route stage 82 provides the routing R from the shift stage 81 to the multiply-accumulate units 38.

Fig. 4 shows a schematic representation of a multiply-accumulate unit 38 of the computing device 3 shown in Figs. 1 and 2. Every single multiply-accumulate unit 38 can consist of a multiplier element 84 and an adder element 83. Both can be provided by a respective logical cell 86 of one of the processing units 31 and can be configured to calculate with float or integer values. In order to achieve timing closure at a meaningful clock rate, the adder element 85 can be pipelined to be processed within a desired number C of clock cycles, e.g., for float 32, this leads typically eight clock cycles. This means that eight clock cycles after two values were at the input of the adder element 85, the result is available to be added with the next multiplication result. This may stall the multiplications. In order to avoid stalling without using an accumulator, the output feature maps can be interleaved. In the present example, within 8 clock cycles C, the corresponding feature value 18 is sliced up into a corresponding number of N 4-bit data slices 13, i.e., 8 with their respective weight values 19.

Fig. 5 shows a schematic representation of super logic regions connecting logic areas 87 of the computing device 3, in particular the processing module 30 shown in Figs. 1 and 2. Each logic area 87 may comprise a number of processing units 31 and respective memory units 32. In particular in modern large size FPGAs, the logic areas 87 are each provided by a respective silicon die. The logic areas 87 can be connected to each other via a physically limited number I of interconnects 88 which can provide the data paths 33 and/or transfer elements 36 of the processing module 30.

For implementing a highly parallel application with maximum performance in the computing device 3, as described above, preferably all available logic areas 87 should be used for processing implementation. Due to the nature of neural network processing for different kernel sizes, many signals have to be routed between the logic areas 87 from the fetch-shift engine 10 to the inputs of the multiply-accumulate units 38. However, the output data 15 of the multiply-accumulate units 38 can be fed directly into the memory unit 32 in the logic area 87. Thus, On the processing module 30, the logic areas 87 do not have to be crossed via the respective interconnects 88.

In order to not spend additional resources on the buffer 71 after the multiply-accumulate units 38, as there are values to be written within a respective number C of clock cycles, e.g., eight consecutive cycles (if the interleaving is done with eight values), the output data 15 preferably is written directly to the memory unit 32 of the very logic area 87 providing the multiply-accumulate module 39. Due to that the input the feature-map value may change after the number C of clock cycles, e.g., it changes every 8 cycles leaving the fetch-shift engine 10 eight cycles time to route a new value. This leads to a serialisation of the data flow from the fetch shift unit 37 to the multiply-accumulate units 38 and/or the multiply-accumulate module 39, and thus allows for reducing the number of crossings for transferring data from the fetch shift unit 37 to the multiply-accumulate units 38 and/or the multiply-accumulate module 39.

Fig. 6 shows a schematic representation of a serialisation through the processing of data slices 13 as performed by the computing device 3 shown in Figs. 1 and 2. One example implementation could be to transmit the data slices 13 as a number of N values with 4 bits sliced off from 32-bit values, to be transferred from the fetch shift engine 10 to the multiply-accumulate units 38 via the interconnects 88. After respective number of clock cycles C, e.g., 8 cycles, the complete values of the respective data slices 13 are transmitted via the respective interconnects 88 and can then be used for the multiplication performed by the multiply-accumulate units 38.

### List of Reference Signs

- 1: computer system
- 2: computer system integration arrangement
- 3: computing device
- 4: apparatus / vehicle
- 5: computer
- 6: computer system integration program
- 7: computer-readable data carrier
- 7a: computer-readable medium
- 7b: data carrier signal

- 10: fetch shift engine
- 11: data object
- 12: data segments / data words
- 13: data slices
- 14: zero padding
- 15: output data
- 16: max pooling
- 17: resizing
- 18: feature value
- 19: weight value
- 20: interface unit

- 30: processing module
- 31: processing unit
- 32: memory unit
- 33: data paths
- 34: execution group
- 35: boundary
- 36: transfer element
- 37: fetch shift unit
- 38: multiply-accumulate unit
- 39: multiply-accumulate module
- 40: external memory module
- 41: memory area
- 50: data connection
- 60: control element

- 70: control device
- 71: buffer
- 72: controller
- 73: weight storage

- 80: fetch stage
- 81: shift stage
- 82: route stage
- 83: register element
- 84: multiplier element
- 85: adder element
- 86: logical cell
- 87: logic area
- 88: interconnects

- C: clock cycles
- L: Line
- A: Array
- R: Routing

## Claims

1. Computing device (3) for deterministic execution of neural networks, comprising
at least one processing module (30) carrying at least one processing unit (31) having a number of logical cells (86);
an input interface unit (20) for feeding a data object (11) to the processing module (30), and a
fetch shift unit (37) linked to the input interface unit and to at least a some of the logical cells (86) which are configured as multiply-accumulate units (38);
wherein the fetch shift unit (37) contains a fetch shift engine (10) configured to slice up the data object (11) into data slices (13) to be transferred to the multiply-accumulate units (38).

2. Computing device (3) according to claim 1, wherein the fetch shift unit (37) is configured to feed the multiply-accumulate units (38) with data slices (13) layered in line with a pre-defined data order of the data object (11).

3. Computing device (3) according to claim 1 or 2, wherein the fetch shift engine (10) is configured to perform zero padding (14) on a data object (11) to provide a desired data dimension.

4. Computing device (3) according to at least one of claims 1 to 3, wherein the multiply-accumulate units (38) are configured to perform a single multiply-accumulate operation.

5. Computing device (3) according to according to at least one of claims 1 to 4, wherein at least some of the multiply-accumulate units (38) are grouped as a multiply-accumulate module (39).

6. Computing device (3) according to at least one of claims 1 to 5, wherein data words (12) of the data object (11) are sliced up into the data slices (13)

7. Computing device (3) according claim 6, wherein an amount N of data slices (13) constituting the data word (12) equals a number C of consecutive computational cycles within which the fetch shift unit (37) is configured to feed the amount N of data slices (13) to the multiply-accumulate units (38).

8. Computing device (3) according to at least one of claims 1 to 7, wherein the computing device (3) is configured to execute a convolution operation with a weight value (19) assigned to every feature value (18).

9. Computing device (3) according to at least one of claims 1 to 8, wherein input feature values (18) contained in a feature map are changed before and/or after a pre-defined number of computation cycles of the multiply-accumulate units (38).

10. Computing device (3) according to at least one of claims 1 to 9, wherein output values of at least some of the multiply-accumulate units (38) are fed back to the fetch shift unit (37).

11. Computing device (3) according to at least one of claims 1 to 10, wherein memory units (32) are assigned to the multiply-accumulate units (38) and output values of at least some of the multiply-accumulate units (38) are directly written to the memory units (32).

12. A computer system (1) providing a neural network, comprising at least one Computing device (3) according to at least one of claims 1 to 11.

13. An apparatus (4), such as a vehicle, in particular an aircraft, comprising a computer system (1) according to claim 12.

14. A method for providing a computing device (3), the method comprising the steps of
providing at least one processing module (30) carrying at least one processing unit (31) having a number of logical cells (86);
providing an input interface unit (20) for feeding a data object (11) to the processing module (30),
configuring at least some of the logical cells (86) as multiply-accumulate units (38);
and providing a fetch shift unit (37) linked to the input interface unit and to the multiply-accumulate units (38) and containing a fetch shift engine (10) configured to slice up the data object (11) into data slices (13) to be transferred to the multiply-accumulate units (38).

15. A computer system configuration arrangement (2) configured to carry out the steps of a method according to claim 14.
